# EUROPEAN PATENT APPLICATION

(11) **EP 3 089 519 A1**
(43) Date of publication of application: **02.11.2016**
(21) Application number: 15275125.1
(22) Date of filing: 30.04.2015
(51) Int. Cl.: H04W 48/16, H04W 48/08, H04W 48/18, H04W 88/10

(54) **CELLULAR NETWORK SELECTION**

(71) Applicant: BRITISH TELECOMMUNICATIONS public limited company, London EC1A 7AJ (GB)
(72) Inventor: The designation of the inventor has not yet been filed
(74) Representative: Tuckett, William John

(57) **Abstract**

This invention relates to, in one aspect, a wireless networking device comprising a transmitter configured to transmit a first wireless networking signal including an identifier for the wireless networking device and an identifier for a cellular network of a basestation associated with the wireless networking device, and, in a second aspect, a User Equipment, UE, comprising a receiver configured to receive a first wireless networking signal from a wireless networking device, the first wireless networking signal including an identifier for the wireless networking device and an identifier for a cellular network of a basestation associated with the wireless networking device; and a processor configured to use the identifier for the wireless networking device and the identifier for the cellular network of the basestation associated with the wireless networking device to initiate a cellular network selection operation.

## Description

### Field of the Invention

The present invention relates to a communications network.

### Background

In cellular communications networks, a User Equipment (UE) connects to a basestation in order to connect to the cellular core network and receive telephone and data services. Most countries operate a multi-operator setup in which basestations of different Mobile Network Operators (MNOs) provide radio access to UEs within their coverage area. Accordingly, a process is used to ensure that a UE subscribing to a particular MNO may only connect to a particular set of basestations (e.g. a basestation of that MNO or a basestation of a roaming partner of that MNO).

This process is known as 'PLMN (Public Land Mobile Network) selection' and an example in a Long-Term Evolution (LTE) 4^{th} Generation (4G) network will now be described. Each MNO has a unique PLMN ID for its network (or several PLMN IDs which are each unique for a particular network) and are based on the network's Mobile Country Code (MCC) and Mobile Network Code (MNC). Each UE contains a Subscriber Identifier Module (SIM), issued by the MNO to the UE owner, which includes the PLMN ID of the network the user is authorised to use. Each basestation is owned by a particular MNO and transmits a signal (in System Information Block 1) including the MNO's PLMN ID. The aim of the PLMN selection process is to connect the UE to a basestation having a matching PLMN ID.

Firstly, the UE scans all RF channels within its supported frequency bands. The UE then decodes the System Information Block (SIB) of the strongest basestation in each carrier to determine each basestation's PLMN ID. The UE then reports the PLMN IDs of these basestations to its Non-Access Stratum (NAS) layer. The NAS layer is responsible for selecting a PLMN from the list of reported PLMN IDs based on a Home PLMN (HPLMN, being that of the MNO the user is subscribed to) and a list of Equivalent HPLMNs (EHPLMNs, being MNOs having roaming agreements with the MNO the user is subscribed to), which are both derived from the UE SIM. The NAS layer then selects either the HPLMN or, if the HPLMN is unavailable, the highest priority EHPLMN.

Once the PLMN has been selected, the UE then performs a cell selection process in order to select and connect to the most appropriate basestation of the selected PLMN.

In some circumstances, the UE does not report any PLMN IDs which are either the HPLMN or on the list of EHPLMNs. In this case, the NAS layer selects another PLMN, and the UE connects to a basestation of that PLMN. The UE then only receives restricted radio access, such as an emergency only service.

If the PLMN selection operation results in the NAS layer selecting a PLMN which is not the HPLMN, then the UE repeats the PLMN selection process at a later time in the hope that a basestation of the UE's HPLMN is available and that PLMN and basestation can be selected. This is generally desirable as there may be roaming charges associated with an EHPLMN and the UE receives restricted radio access when connected to a basestation which isn't of its HPLMN or an EHPLMN. Accordingly, UEs are configured to periodically scan all RF channels within its supported frequency bands, decode the SIBs, report the PLMN IDs to the NAS layer and select a PLMN. This requires a substantial amount of power (and thus battery life) due to the amount of processing involved. To alleviate this problem, the UE has a configurable timer to define the length of time the UE remains connected to a basestation before performing a PLMN reselection operation. This is typically one hour, but may be between 6 minutes and 8 hours in 6 minute increments. The UE may therefore select an appropriate balance between improving the chances of selecting the HPLMN and decreasing battery life through repeated PLMN selection operations. However, this solution still results in the UE being connected to a non-HPLMN basestation for a significant amount of time (usually one hour), if the basestations available at start up (or upon returning to an area having cellular radio access) are not part of the HPLMN.

An emerging technology in LTE is small cell technology (also known as Home eNodeBs, or more specifically as femtocells, picocells or microcells to denote a small cell having a particular coverage area). These small cells provide cellular radio access to UEs over a smaller coverage area than the traditional macrocell (typically over an area covering the user's premises), and implement a backhaul connection to the cellular core network over a DSL or optical fibre connection. These small cells form a further cellular network overlaying the macrocell network, but at a much higher basestation density. The UE may connect to either a macrocell basestation or small cell basestation and receive cellular radio access, and may also roam between any of these basestations with appropriate handover processes. The present inventors have realised that the chances of a UE connecting to a small cell basestation which is not part of its HPLMN will increase as this technology is exploited, as the limited range of a small cell means that there will be many areas in which the UE can only receive cellular radio access from cells of other MNOs (that is, assuming a macrocell of the HPLMN doesn't cover that particular area). In this event, the UE will not connect to a basestation of the HPLMN, and will not perform a PLMN reselection operation for a relatively long time. This may be addressed by reducing the amount of time between PLMN selection operations, but this reduces the battery life of the UE. The present inventors have realised that it is desirable to address this problem in a different manner.

### Summary of the Invention

According to a first aspect of the invention, there is provided a wireless networking device comprising a transmitter configured to transmit a first wireless networking signal including an identifier for the wireless networking device and an identifier for a cellular network of a basestation associated with the wireless networking device. According to a second aspect of the invention, there is provided a User Equipment, UE, comprising a receiver configured to receive a first wireless networking signal from a wireless networking device, the first wireless networking signal including an identifier for the wireless networking device and an identifier for a cellular network of a basestation associated with the wireless networking device; and a processor configured to use the identifier for the wireless networking device and the identifier for the cellular network of the basestation associated with the wireless networking device to initiate a cellular network selection operation.

In embodiments of the invention, as described below, the UE is able to determine the PLMN ID (i.e. the identity of a cellular network) of a basestation associated with a wireless networking device by decoding a signal (e.g. a beacon frame) from that wireless networking device. If the PLMN ID matches the PLMN ID of the Home PLMN stored on the UE's SIM card, the UE is able to determine that it is in the vicinity of a basestation of its Home PLMN. The UE may then trigger a PLMN selection operation, before its PLMN reselection timer expires, with the knowledge that it will receive SIB messages from that basestation and will therefore connect to a basestation of its Home PLMN.

The present invention therefore allows the UE to make informed decisions on when to perform a PLMN selection operation, rather than merely performing repeated PLMN selection operations at a particular periodicity defined by the PLMN reselection timer.

The processor of the UE may initiate the cellular network selection operation in response to receiving the first wireless networking signal. In this manner, the UE significantly reduces the amount of time it is connected to an inferior network as it may perform a PLMN selection operation as soon as it decodes a beacon frame indicating that it is in the vicinity of a basestation of its Home PLMN.

The UE may further comprise a memory configured to store the identifier for the wireless networking device and the identifier for the cellular network of the basestation associated with the wireless networking device. By storing the identifiers, the UE may then determine that it is in the vicinity of a basestation of its Home PLMN simply by decoding the SSID from a beacon frame of a wireless networking device (i.e. without having to decode the identifiers for the cellular network of the basestation associated with the wireless networking device).

The processor may be configured to use the stored identifier for the wireless networking device and the stored identifier for the cellular network of the basestation associated with the wireless networking device to initiate a cellular network selection operation. The receiver may be configured to receive a second wireless networking signal including the identifier for the wireless networking device, and, in response, the processor may be configured to use the stored identifier for the wireless networking device and the stored identifier for the cellular network of the basestation associated with the wireless networking device to initiate a cellular network selection operation.

According to a third aspect of the invention, there is provided a method of operating a wireless networking device, the method comprising the steps of: receiving an identifier for a cellular network of a basestation associated with the wireless networking device; and transmitting a first wireless networking signal including an identifier for the wireless networking device and an identifier for the cellular network.

The method may further comprise the steps of: receiving a second wireless networking signal from a second wireless networking device, the second wireless networking signal including an identifier for the second wireless networking device and an identifier for a cellular network of a basestation associated with the second wireless networking device; storing the identifier for the second wireless networking device and the identifier for the cellular network of a basestation associated with the second wireless networking device in memory.

The first wireless networking signal may further include the identifier for the second wireless networking device and the identifier for the cellular network of the basestation associated with the second wireless networking device.

According to a fourth aspect of the invention, there is provided a method of operating a User Equipment, UE, the method comprising the steps of: receiving a first wireless networking signal including an identifier for a wireless networking device and an identifier for a cellular network of a basestation associated with the wireless networking device; and using the identifier for the wireless networking device and the identifier for the cellular network of the basestation associated with the wireless networking device to initiate a cellular network selection operation.

The step of using the identifier for the wireless networking device and the identifier for the cellular network of the basestation associated with the wireless networking device may include initiating a cellular network selection operation in response to receiving the first wireless networking signal.

A non-transitory computer-readable storage medium storing a computer program or suite of computer programs is also provided, which upon execution by a computer system performs the method of either the third or fourth aspects of the invention.

### Brief Description of the Figures

In order that the present invention may be better understood, embodiments thereof will now be described, by way of example only, with reference to the accompanying drawings in which:
Figure 1 is a schematic diagram of a communications network of a first embodiment of the present invention, including a macrocell basestation, a first and second Customer Premises Equipment (CPE) and a User Equipment (UE);
Figures 2a and 2b are schematic diagrams illustrating the first and second CPEs of Figure 1;
Figure 3 is a diagram of a beacon frame transmitted by the first and second CPEs of Figure 1;
Figure 4 is a schematic diagram of the UE of Figure 1;
Figure 5 is a flow diagram illustrating a method of an embodiment of the present invention; and
Figure 6 is a schematic diagram of a communications network of a second embodiment of the present invention.

### Detailed Description of Embodiments

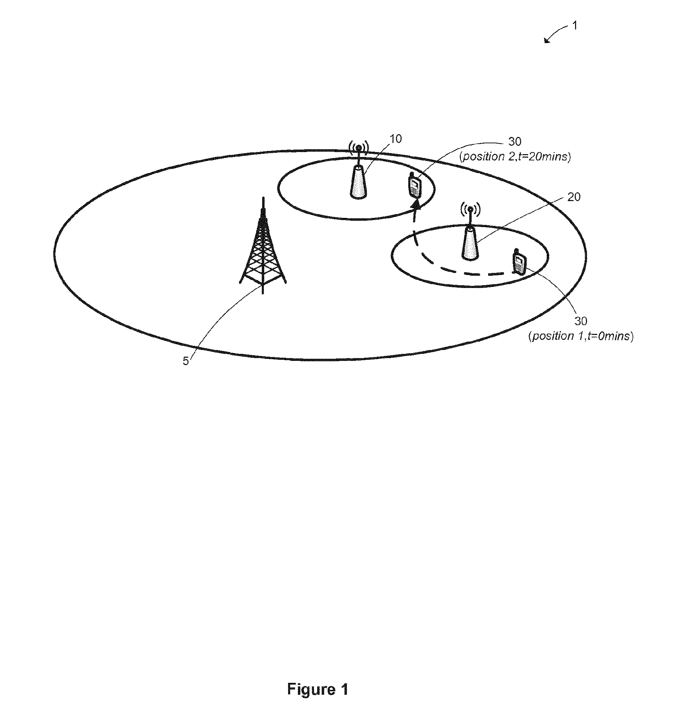

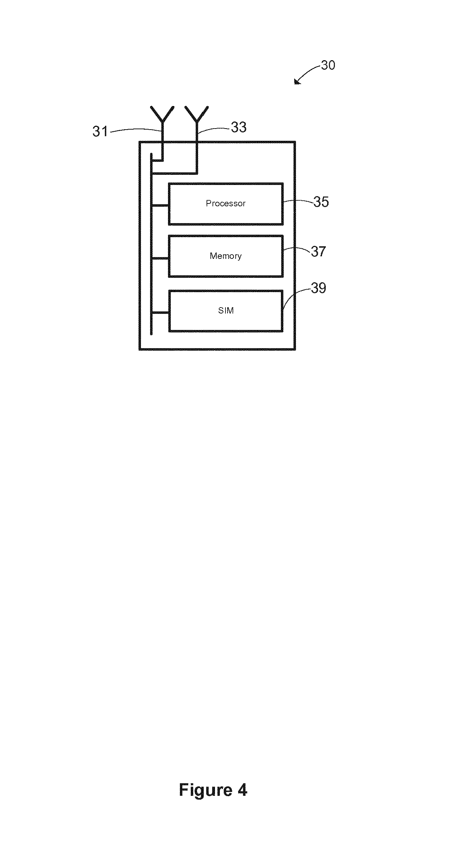

A first embodiment of an embodiment of a cellular communications network 1 of the present invention will now be described with reference to Figures 1 and 4. The cellular communications network 1 includes a macrocell basestation 5, a first and second Customer Premises Equipment (CPE) 10, 20, and a User Equipment (UE) 30. The coverage areas of the macrocell basestation 5 and the first and second CPEs 10, 20 are shown be their respective enveloping ellipses. The first CPE 10 and UE 30 are both associated with a first Mobile Network Operator (MNO), MNO₁, and the macrocell basestation 5 and second CPE 20 are associated with a second MNO, MNO₂.

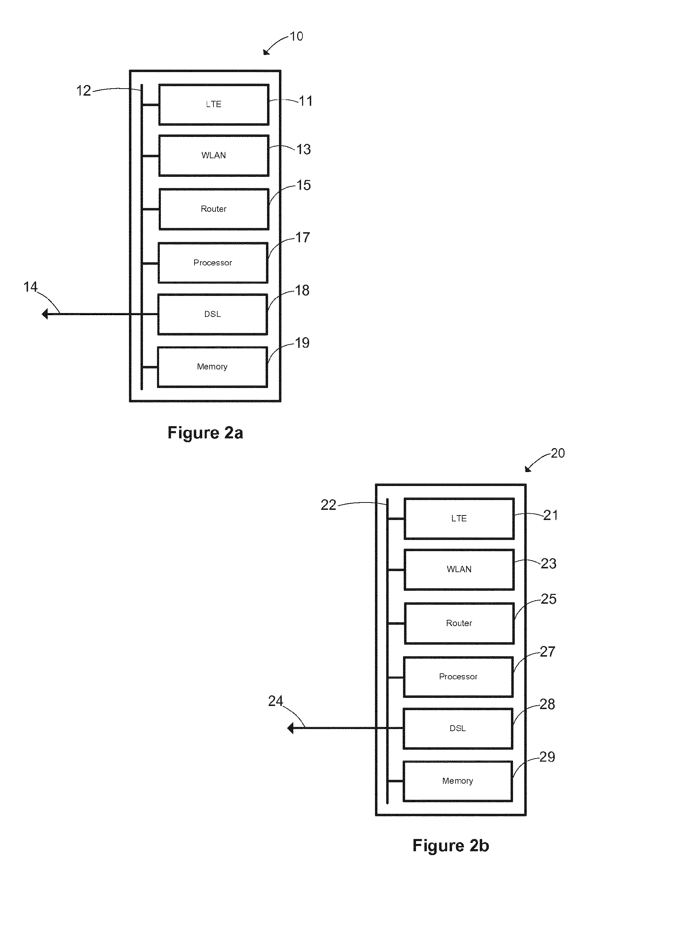

The first and second CPEs 10, 20 are shown in more detail in Figures 2a and 2b respectively. As shown, the first CPE 10 includes a cellular module 11 (labelled "LTE") configured for cellular communications according to the LTE 4G protocol, a WLAN module 13 configured for wireless communications according to any one of the IEEE 802.11 family of standards (commonly known as "Wi-Fi"), a routing module 15 configured to route data packets between the various modules of the first CPE 10 and any connected UEs, a processor 17, a DSL modem 18 (connected to backhaul 14), and memory 19. These modules are connected via a bus 12. In this embodiment, the second CPE 20 has an identical construction to the first CPE 10, and thus also includes a cellular module 21, a bus 22, a WLAN module 23, a backhaul 24, a routing module 25, a processor 27, a DSL modem 28 and a memory 29.

As the cellular modules 11, 21 of the first and second CPEs 10, 20 both operate in accordance with the LTE 4G standard, both transmit a System Information Block (SIB) message. This includes the Public Land Mobile Network (PLMN) identifier (PLMN ID) for the respective MNOs, such that the SIB message for first CPE 10 includes the PLMN ID for MNO₁, PLMN ID₁, and the SIB message for both the macrocell basestation and second CPE 20 includes the PLMN ID for MNO₂ PLMN ID₂, These messages may be decoded by the UE 30 to determine the PLMN ID.

The WLAN modules 13, 23 of the first and second CPEs 10, 20 both operate in accordance with any one of the IEEE 802.11 standards and therefore transmit a beacon frame. The beacon frame includes a Basic Service Set Identification (BSSID), which is the MAC address of the relevant WLAN module 13, 23. The purpose of the BSSID is to allow UEs to identify and connect to it. An informal Server Set Identification (SSID) is the user friendly name transmitted with the BSSID, allowing the user to quickly select the correct SSID thus causing the UE to connect to the WLAN module 13, 23 having the corresponding BSSID (i.e. MAC address).

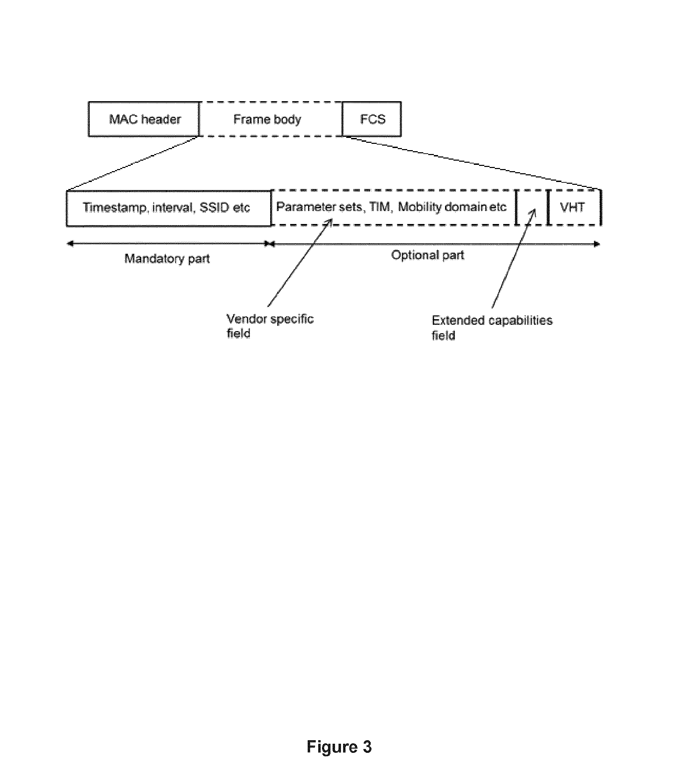

The structure of the beacon frame is shown in Figure 3. The frame body of the beacon frame includes the SSID field, which is a single field having a variable size between 0 and 32 bytes. The beacon frame also includes 'vendor specific' or 'extended capabilities' fields, which are configurable and may contain other data relating to the service set or the particular WLAN module transmitting the beacon frame. For example, the extended capabilities field may be used to indicate that the WLAN module is operating in Closed Subscriber Group (CSG) mode, such that only authorised subscribers may connect to that WLAN module.

The WLAN module 13, 23 may also transmit several beacon frames with different SSIDs (such as a first beacon frame including a Closed Subscriber Group (CSG) SSID and a second beacon frame including a public SSID). In this configuration, each SSID is different but corresponds to the same WLAN module 13, 23, which allows different users to connect to the same WLAN module 13, 23 with differing Quality of Service (QoS). For example, a first user may connect to WLAN module 13, 23 via the CSG SSID and receive a relatively high QoS, whilst members of the public may also connect to the WLAN module 13, 23 via the public SSID but receive a relatively low QoS. The relative QoS may be managed by the WLAN and router modules 13, 23, 15, 25 by setting up corresponding Virtual Local Area Networks (VLANs).

In this embodiment, the WLAN module 13 of the first CPE 10 receives data from the cellular module 11 of the first CPE 10 via bus 12. This data includes an identifier for the cellular module 11 (i.e. eCGI₁, the Cell Global Identifier for the cellular module 11) and an identifier of the Home PLMN that the cellular module 11 is associated with (i.e. PLMN₁, indicating that the cellular module is associated with MNO₁). The WLAN module 13 stores this information in memory module 19. The WLAN module 13 then configures the beacon frames such that the extended capabilities field includes the cellular module identifier, eCGI₁, and the Home PLMN identifier, PLMN₁, of the cellular module 11.

This new beacon frame is used by the UE 30 to quickly identify the mobile network of a basestation associated with the wireless networking module transmitting the beacon frame. If the mobile network matches the home mobile network of the UE 30 (e.g. the HPLMN identified on its SIM card), then the UE 30 can attach to that basestation by initiating a PLMN selection operation. This will be explained in more detail below, after an overview of the UE 30 shown in Figure 4.

As shown in Figure 4, the UE 30 includes a cellular antenna 31, a WLAN antenna 33, a processor 35, a memory 37 and a SIM card 39. In this embodiment, the UE 30 is configured for cellular communications according to the LTE 4G standard using both the cellular antenna 31 and the processor 35, and also configured for wireless communications using any one of the IEEE 802.11 family of standards (i.e. Wi-Fi) using the WLAN antenna 33 and processor 35. The UE 30 is therefore able to decode a SIB message from the macrocell basestation 5 or from either of the CPEs 10, 20 to determine the PLMN ID of the macrocell basestation 5 or the cellular modules 11, 21 of the CPEs 10, 20 (i.e. using the cellular antenna 31 and processor 35). In this embodiment, the UE 30 is also able to decode a beacon frame from either of the CPEs 10, 20 to determine the SSID of the WLAN modules 13, 23 of the first and second CPEs 10, 20 respectively, and also to determine the PLMN ID of the cellular module 11, 21 associated with the WLAN module 13, 23 of the first and second CPEs 10, 20 respectively. This data can all be stored in memory 37. The SIM card 39 also contains a memory portion storing the PLMN ID of the Home PLMN for the UE 30 (i.e. PLMN₁).

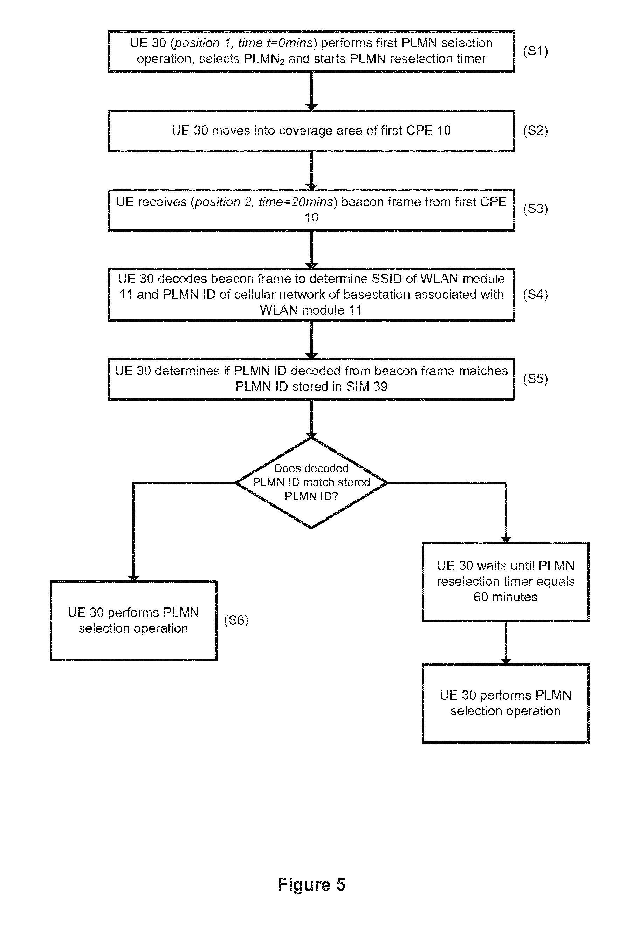

A first embodiment of a method of the present invention will now be described with reference to Figures 1 and 5. In this embodiment, the UE 30 is initially in position 1 (as shown in Figure 1), and is therefore within the coverage area of cellular transmissions from the macrocell basestation 5 and the second CPE 20. The UE 30 is turned on and performs an initial PLMN selection operation (step S1). Accordingly, the UE 30 scans through the entire RF frequency band allowed by the cellular antenna 31. The UE 30 receives SIB messages from both the macrocell basestation 5 and the second CPE 20, which are decoded at the processor 35 to determine their PLMN IDs. In this embodiment, the PLMN ID for both the macrocell basestation 5 and the second CPE 20 is PLMN₂, as both are associated with the second MNO, MNO₂. The UE 30 then determines if the PLMN IDs of the received SIB messages match the PLMN ID stored on its SIM card 39. As noted above, the UE 30 is associated with MNO₁, and stores the PLMN ID of its Home PLMN (PLMN₁) on its SIM card. Accordingly, there is no match and the UE 30 can only connect to the macrocell basestation 5 or the second CPE 20 with restricted service. In this embodiment, the UE 30 connects to the macrocell basestation 5 with restricted service.

The UE 30 then starts a PLMN reselection timer (which is configurable between 6 minutes and 8 hours, and is set to 60 minutes in this embodiment). When the PLMN reselection timer reaches 60 minutes, the UE 30 performs the PLMN selection operation, such that it searches all RF frequency bands, decodes all received SIB messages, and selects a PLMN according to its predefined criteria.

The UE 30 is a mobile entity and therefore moves around the cellular communications network 1. In step S2 of Figure 5, and as shown in Figure 1, the UE 30 moves into the first CPE's 10 coverage area (which is associated with the same MNO as the UE 30, MNO₁) 20 minutes after being turned on and connecting to the macrocell basestation 5 (i.e. 40 minutes before the PLMN reselection timer expires and triggers a further PLMN selection operation). The UE 30 receives cellular transmissions from both the macrocell basestation 5 and the first CPE 10 at its cellular antenna 31, and receives WLAN transmissions from the first CPE 10 at its WLAN antenna 33. As the UE's PLMN reselection timer is currently only at 20 minutes, the UE 30 remains connected to the macrocell basestation 5 and does not decode any SIB messages. However, the UE 30 receives a beacon frame at the WLAN antenna 33 from the first CPE 10 (step S3), which is used by the UE 30 to trigger a PLMN selection operation before the PLMN reselection timer expires. This process will now be described.

The UE 30 receives the beacon frame at the WLAN antenna 33, which is decoded by processor 35 to determine the SSID of the wireless module 13 of the first CPE 10 (i.e. SSID₁), the eCGI of the cellular module 11 associated with the WLAN module 13 (i.e. eCGI₁), and the PLMN ID of the MNO of the cellular module 11 associated with the WLAN module 13 (PLMN ID₁) (step S4). This data is stored in memory 37 on the UE 30. This is shown in the following table:

**Table 1: Table representing data stored in memory 37 of UE 30**

| **Received Beacon Frame** | **WLAN Module ID** | **Associated Basestation ID** | **PLMN ID of MNO of Associated Basestation** |
|---|---|---|---|
| beacon₁ | MAC₁ (MAC address for WLAN module 13) | eCGI₁ (eCGI for cellular module 11) | PLMN ID₁ (PLMN ID for MNO₁) |

In step S5, the UE 30 is then configured to determine if a PLMN ID decoded from the beacon frame matches the PLMN ID stored on SIM card 39 (which represents its home MNO). In this case, the PLMN ID decoded from the beacon frame and the PLMN ID stored on the SIM card 39 are both PLMN ID₁. In response to this determination, the UE 30 is configured to start a PLMN selection operation (i.e. before expiry of the PLMN reselection timer), in which it will receive SIB messages from both the macrocell basestation 5 and the cellular module 13 of the first CPE 10 (step S6). The UE 30 will therefore determine that the macrocell basestation 5 transmits PLMN ID₂ and the cellular module 11 of the first CPE 10 transmits PLMN ID₁. The UE 30 will then connect to the first CPE 10 and receive full service (as it is part of the same MNO).

In an alternative scenario in which the PLMN ID decoded from the beacon frame does not match the PLMN ID stored on SIM card 39, then the UE 30 does not react and continues to wait until expiry of its PLMN reselection timer before performing a PLMN selection operation.

The present invention therefore improves the operation of the UE 30 and reduces the amount of time it is connected to a network which is not its HPLMN. In the prior art, the UE 30 waited until the expiry of a timer before performing a PLMN selection operation. This was done without any knowledge or expectation that it was in the vicinity of a basestation of a more suitable network. However, in the present invention, the UE 30 is able to determine that it is nearby a basestation of its home network (using WLAN signals from an associated WLAN module), and use this information to trigger a PLMN selection operation in order to connect to that basestation. The UE 30 is configured to scan the frequency band of the WLAN for broadcast signals more frequently (as it has a relatively small frequency band and requires less processing power to decode than LTE) so there is a greater chance it will receive the modified beacon frame and determine that it is in the vicinity of a basestation of its HPLMN. This therefore reduces the amount of time the UE 30 remains connected to a basestation of a non-HPLMN network. This was only possible in the prior art by increasing the frequency of PLMN selection operations. However, each PLMN selection operation was performed without any knowledge of nearby basestations, and any operation which did not result in the selection of its HPLMN would unnecessarily waste battery life.

The skilled person will understand that there is a further situation in which the UE 30 benefits from having stored data on associations between a WLAN module and the mobile network operator of the basestation associated with that WLAN module. As the UE 30 roams across coverage areas of several CPEs, it may simply decode the SSID part of the beacon frame and determine if the basestation associated with the WLAN module having that SSID is part of the same mobile network by consulting the stored data. The UE 30 therefore only needs to decode the data regarding the associated basestation and its home mobile network once, and store this in memory, to benefit from this invention. However, it may be beneficial for CPEs to send out periodic beacon frames including this additional information on the associated basestation and its home mobile network, as this may change over time and the UE should update its records.

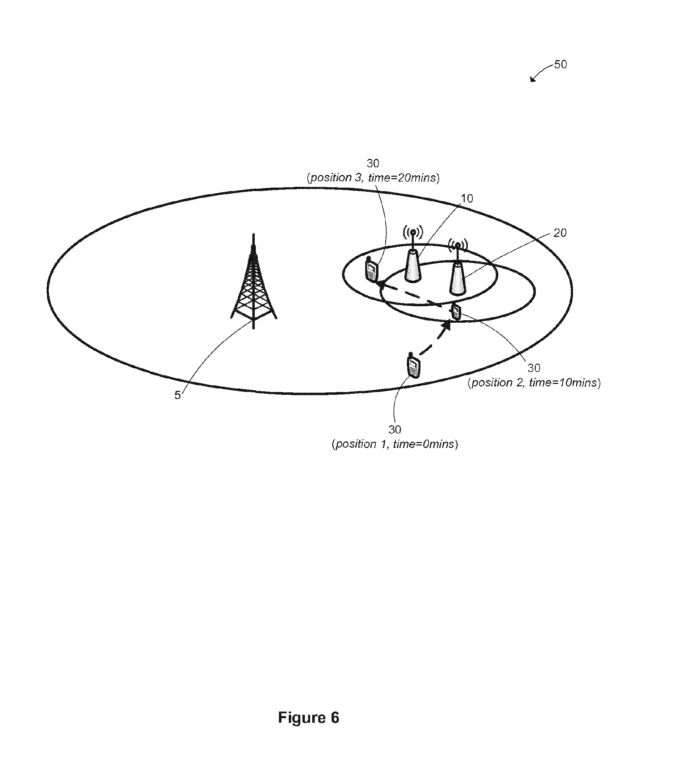

A second embodiment of a communications network 50 of the present invention will now be described with reference to Figure 6. The same reference numerals will be used to represent similar elements between the communications networks 1, 50 of the first and second embodiments. The communications network 50 includes a macrocell basestation 5, a first and second CPE 10, 20 and a UE 30. In this embodiment, the first and second CPEs 10, 20 have overlapping coverage areas, such that each CPE can receive cellular signals from the other over the air. As before, the UE 30 and first CPE 10 are part of the first MNO, MNO₁, and the macrocell basestation 5 and the second MNO 20 are part of the second MNO, MNO₂. In this scenario, the UE 30 is initially within the coverage area of the macrocell basestation 5, but outside the coverage areas of the first and second CPEs 10, 20. Accordingly, on start-up, the UE 30 performs a PLMN selection operation and connects to the macrocell basestation 5 with restricted service.

In a similar manner to the first embodiment above, the first and second CPEs 10, 20 include WLAN modules configured to construct a beacon frame containing a basestation ID (e.g. eCGI) of a cellular module associated with the WLAN module, and a mobile network ID (e.g. PLMN ID) of the mobile network associated with that cellular module. Accordingly, the first CPE 10 transmits a beacon frame including the eCGI of its cellular module (i.e. eCGI₁) and the PLMN ID of the first MNO (i.e. PLMN ID₁), and the second CPE 20 transmits a beacon frame including the eCGI of its cellular module (i.e. eCGI₂) and the PLMN ID of the second MNO (i.e. PLMN ID₂).

In this embodiment, the first CPE 10 receives the beacon frame transmitted by the second CPE 20 (as it is within the coverage area of the second CPE 20). In response, the first CPE 10 is configured to populate a database to record this information in memory 19 (alongside the data regarding the eCGI and PLMN ID of its own associated basestation). This data is shown in the following table:

**Table 2: Table representing data stored in memory 19 on first CPE 10**

| **WLAN module ID** | **Associated Basestation ID** | **PLMN ID of MNO of associated basestation** |
|---|---|---|
| MAC₁ (MAC address for WLAN module 13 of first CPE 10) | eCGI₁ (eCGI for cellular module 11 of first CPE 10) | PLMN ID₁ (PLMN ID for MNO₁) |
| MAC₂ (MAC address for | eCGI₂ (eCGI for cellular | PLMN ID2 (PLMN ID for |
| WLAN module 21 of second CPE 20) | module 21 associated with WLAN module 23 of second CPE 20) | MNO₂) |

Similarly, the second CPE 20 receives the beacon frame transmitted by the first CPE 10 (as it is within the coverage area of the first CPE 10), and also populates a database to record the same information in memory.

The first and second CPEs 10, 20 both use this data to create a more detailed beacon frame, including information on an association between WLAN and cellular module identifiers, and the PLMN ID of the MNO associated with that cellular module, for both the first CPE 10 and the second CPE 20.

As noted above in the first embodiment, it is only necessary for the UE 30 to decode the beacon frame from a CPE in order to determine the home mobile network of its associated basestation, and store this data in memory, to benefit from this invention. Thereafter, the UE 30 only needs to decode the SSID part of the beacon frame and consult the stored data to determine the home mobile network of the associated basestation, in order to trigger a PLMN selection operation which will result in a home mobile network being selected. In this second embodiment, the details of a plurality of WLAN modules and the home mobile networks of their respective associated basestations can be sent in a single beacon frame from one CPE. The UE 30 may therefore determine that it is nearby a basestation of its own mobile network based on the SSID transmitted from an associated WLAN module alone without having decoded an enriched beacon frame directly from that basestation beforehand.

Accordingly, as shown in Figure 6, the UE 30 moves from its first position (in which it is within the coverage area of the macrocell basestation 5 only) to a second position ten minutes after connecting to the macrocell basestation 5. This second position is within the coverage area of the second CPE 20 and the macrocell basestation 5. The UE 30 decodes the beacon frame from the WLAN module 23 of the second CPE 20 and determines that the PLMN ID for the cellular module 21 of the second CPE 20 is PLMN₂. The UE 30 therefore does not trigger a PLMN selection operation and remains connected to the macrocell basestation 5. However, as noted above, the beacon frame also includes details of the first CPE's WLAN module's ID, associated basestation ID, and PLMN ID for the associated basestation. These are all stored in memory 37 and mapped to one another.

The UE 30 then moves into the third position after another ten minutes have passed. This third position is within the coverage area of the first CPE 10 and macrocell basestation 5. In this example, the first CPE 10 transmits a standard beacon frame (i.e. one without the information regarding the associated basestation ID or the PLMN ID of the associated basestation). However, as the UE 30 has stored information regarding the relationship between the first CPE's WLAN module ID, associated basestation ID and PLMN ID of the associated basestation stored in memory 37, it is able to determine that the PLMN ID for cellular module 11 of the first CPE 10 is PLMN₁ (by matching the WLAN ID decoded from the beacon frame to the WLAN ID stored in memory, and using the stored relationship between WLAN ID and PLMN ID). This matches the PLMN ID stored on the UE's SIM card 39. Accordingly, the UE 30 triggers a PLMN selection operation.

The skilled person will understand that any form of WLAN signal which may be used or modified to include an identifier for the cellular network of a basestation associated with the wireless networking device may be used in the present invention. Thus, the beacon frame is used only as an example in the embodiments described above. Furthermore, the skilled person will understand that it is not a requirement for the basestation information to be contained in a broadcast WLAN signal. A UE may be configured to receive an unmodified broadcast message, and then query the WLAN device (e.g. using the Generic Advertising Service) for information on the cellular network of the associated basestation. Furthermore, the skilled person will understand signals of any protocol may be used.

The skilled person will understand that any combinations of features is possible within the scope of the invention, as claimed.

## Claims

1. A wireless networking device comprising a transmitter configured to transmit a first wireless networking signal including an identifier for the wireless networking device and an identifier for a cellular network of a basestation associated with the wireless networking device.

2. A wireless networking device as claimed in Claim 1, further comprising a memory, wherein
the transmitter is a transceiver configured to receive a second wireless networking signal including an identifier for a second wireless networking device and an identifier for a cellular network of a basestation associated with the second wireless networking device, and
the memory is configured to store an association between the identifier for the second wireless networking device and the identifier for a cellular network of the basestation associated with the second wireless networking device.

3. A wireless networking device as claimed in Claim 2, wherein the first wireless networking signal further includes the identifier for the second wireless networking device and the identifier for the cellular network of the basestation associated with the second wireless networking device.

4. A User Equipment, UE, comprising
a receiver configured to receive a first wireless networking signal from a wireless networking device, the first wireless networking signal including an identifier for the wireless networking device and an identifier for a cellular network of a basestation associated with the wireless networking device; and
a processor configured to use the identifier for the wireless networking device and the identifier for the cellular network of the basestation associated with the wireless networking device to initiate a cellular network selection operation.

5. A UE as claimed in Claim 4, wherein the processor initiates the cellular network selection operation in response to the receiving the first wireless networking signal.

6. A UE as claimed in either Claim 4 or Claim 5, further comprising a memory configured to store the identifier for the wireless networking device and the identifier for the cellular network of the basestation associated with the wireless networking device.

7. A UE as claimed in Claim 6, wherein the processor is configured to use the stored identifier for the wireless networking device and the stored identifier for the cellular network of the basestation associated with the wireless networking device to initiate a cellular network selection operation.

8. A UE as claimed in Claim 7, wherein the receiver is configured to receive a second wireless networking signal including the identifier for the wireless networking device, and, in response, the processor is configured to use the stored identifier for the wireless networking device and the stored identifier for the cellular network of the basestation associated with the wireless networking device to initiate a cellular network selection operation.

9. A method of operating a wireless networking device, the method comprising the steps of:
receiving an identifier for a cellular network of a basestation associated with the wireless networking device; and
transmitting a first wireless networking signal including an identifier for the wireless networking device and an identifier for the cellular network.

10. A method as claimed in Claim 9, further comprising the steps of:
receiving a second wireless networking signal from a second wireless networking device, the second wireless networking signal including an identifier for the second wireless networking device and an identifier for a cellular network of a basestation associated with the second wireless networking device;
storing the identifier for the second wireless networking device and the identifier for the cellular network of a basestation associated with the second wireless networking device in memory.

11. A method as claimed in Claim 10, wherein the first wireless networking signal further includes the identifier for the second wireless networking device and the identifier for the cellular network of the basestation associated with the second wireless networking device.

12. A method of operating a User Equipment, UE, the method comprising the steps of:
receiving a first wireless networking signal including an identifier for a wireless networking device and an identifier for a cellular network of a basestation associated with the wireless networking device; and
using the identifier for the wireless networking device and the identifier for the cellular network of the basestation associated with the wireless networking device to initiate a cellular network selection operation.

13. A method as claimed in Claim 12, wherein the step of using the identifier for the wireless networking device and the identifier for the cellular network of the basestation associated with the wireless networking device includes initiating a cellular network selection operation in response to receiving the first wireless networking signal.

14. A method as claimed in either Claim 12 or Claim 13, further comprising the step of storing the identifier for the wireless networking device and the identifier for the cellular network of the basestation associated with the wireless networking device.

15. A method as claimed in Claim 14, wherein the step of using the identifier for the wireless networking device and the identifier for the cellular network of the basestation associated with the wireless networking device includes using the stored identifier for the wireless networking device and the stored identifier for the cellular network of the basestation associated with the wireless networking device to initiate a cellular network selection operation.

16. A method as claimed in Claim 15, further comprising the steps of:
receiving a second wireless networking signal including the identifier for the wireless networking device, and, in response,
using the stored identifier for the wireless networking device and the stored identifier for the cellular network of the basestation associated with the wireless networking device to initiate a cellular network selection operation.

17. A non-transitory computer-readable storage medium storing a computer program or suite of computer programs, which upon execution by a computer system performs the method of any one of Claims 9 to 16.
